# EUROPEAN PATENT APPLICATION

(11) **EP 4 418 350 A1**
(43) Date of publication of application: **21.08.2024**
(21) Application number: 22881085.9
(22) Date of filing: 13.10.2022
(51) Int. Cl.: H01M 4/139, H01M 4/13, H01M 4/62

(54) **MIXTURE COMPOSITION FOR SECONDARY BATTERY ELECTRODES, METHOD FOR PRODUCING ELECTRODE MIXTURE SHEET, ELECTRODE MIXTURE SHEET, ELECTRODE AND SECONDARY BATTERY**

(30) Priority: 14.10.2021 JP 2021168911
(71) Applicant: Daikin Industries, Ltd., Osaka 530-0001 (JP)
(72) Inventor: YAMADA, Takaya, Osaka-shi, Osaka 530-0001 (JP); YAMADA, Masahiko, Osaka-shi, Osaka 530-0001 (JP); HIRAGA, Kentarou, Osaka-shi, Osaka 530-0001 (JP); SUI, Xianwei, Osaka-shi, Osaka 530-0001 (JP); TERADA, Junpei, Osaka-shi, Osaka 530-0001 (JP)
(74) Representative: Hoffmann Eitle
(86) International application number: PCT/JP2022/038215
(87) International publication number: WO 2023/063390

(57) **Abstract**

The present disclosure provides a mixture composition for a secondary battery electrode having good properties and a method for producing an electrode mixture sheet, an electrode mixture sheet, an electrode, and a secondary battery that contain the mixture composition for a secondary battery electrode. The mixture composition for a secondary battery electrode includes a binder, a conductive aid and/or an electrode active material, and a liquid component that can be used as a component in a liquid electrolytic solution.

## Description

### Technical Field

The present disclosure relates to a mixture composition for a secondary battery electrode, a method for producing an electrode mixture sheet, an electrode mixture sheet, an electrode, and a secondary battery.

### Background Art

For a lithium ion secondary battery, it is common to produce an all-solid-state secondary battery sheet by coating a slurry obtained by mixing a binder and a solvent on an electrode active material and a conductive aid and then drying.

Meanwhile, a polytetrafluoroethylene resin is a polymer that readily forms fibrils, and when fibrillated is also used as a binder.

Patent Literature 1 discloses a method for producing an electrode in which polytetrafluoroethylene has been formed into fibrils by subjecting a mixture containing an active material and a polytetrafluoroethylene mixed binder material to a high shear treatment using a jet mill.

Patent Literature 2 discloses an electrode for a secondary battery having a sheet shape by adding isopropyl alcohol (IPA) as a liquid lubricant to a mixture in which a powdered active material and a conductive material are three-dimensionally interconnected using a fibrous fluorine-containing polymer resin, preferably a polytetrafluoroethylene resin.

Patent Literature 3 discloses an electrolytic solution that uses an ionic liquid.

Patent Literature 4 discloses a method for producing a polarizable electrode for a capacitor, which includes carbon fine powder, an conductive aid, and a binder, and further uses an organic compound such as alcohol, ether, or ketone as a liquid lubricant.

### Citation List

### Patent Literature

Patent Literature 1: Japanese Translation of PCT International Application Publication No. 2017-517862
Patent Literature 2: Japanese Unexamined Patent Publication No. 2007-26984
Patent Literature 3: International Publication No. WO 2020-071377
Patent Literature 4: Japanese Unexamined Patent Publication No. 2001-307964

### Summary of Invention

### Technical Problem

An object of the present disclosure is to provide a mixture composition for a secondary battery electrode having good properties and a method for producing an electrode mixture sheet that contain the mixture composition for a secondary battery electrode.

### Solution to Problem

The present disclosure relates to a mixture composition for a secondary battery electrode, including a binder, a conductive aid and/or an electrode active material, and a liquid component that can be used as a component in a liquid electrolytic solution.

It is preferred that the mixture composition for a secondary battery electrode contains a conductive aid.

It is preferred that the binder is a polytetrafluoroethylene resin.

It is preferred that the content of the binder is 0.1 to 10% by mass.

It is preferred that the content of the liquid component is 1 to 30% by mass.

It is preferred that the liquid component has a boiling point of 90°C or higher.

It is preferred that the liquid component includes at least one compound selected from the group consisting of an ether compound, an ionic liquid, a carboxylic acid ester compound, a nitrile compound, and a carbonate.

It is more preferred that the liquid component is a carbonate.

It is preferred that the mixture composition for a secondary battery electrode includes an electrode active material.

It is preferred that the mixture composition for a secondary battery electrode includes a positive electrode active material.

The present disclosure also relates to a method for producing an electrode mixture sheet including:
a step (1) of mixing a raw material composition containing a binder, a conductive aid and/or an electrode active material, and a liquid component that can be used as a component in a liquid electrolytic solution;
a step (2) of promoting formation of fibrils of the raw material composition obtained in step (1) to produce granules; and
a step (3) of rolling the granulated composition obtained in step (2) into a sheet shape.

The present disclosure also relates to an electrode mixture sheet including the above-described mixture composition for a secondary battery electrode.

The present disclosure also relates to electrode including the above-described electrode mixture sheet.

The present disclosure also relates to a secondary battery including the above-described electrode mixture sheet.

### Advantageous Effects of Invention

According to the present disclosure, it is possible to produce a mixture composition for a secondary battery electrode that has excellent battery characteristics and moldability without using conventional solvents, by using a liquid component that can be used as a component in a liquid electrolytic solution, and an electrode mixture sheet using such a mixture composition.

### Description of Embodiment(s)

The present disclosure will now be described in detail.

The mixture composition for a secondary battery electrode of the present disclosure contains a binder and a conductive aid and/or an electrode active material, and further contains a liquid component that can be used as a component in a liquid electrolytic solution.

It is preferred that the mixture composition for a secondary battery electrode of the present disclosure contains a binder and a conductive aid, and further contains a liquid component that can be used as a component in a liquid electrolytic solution.

Conventional mixture sheets for a battery are usually prepared by preparing a slurry obtained by using a solvent in which a binder is dissolved to disperse a powder, which is a mixture component for a secondary battery, and then coating and drying the slurry. In this case, there are issues with production process control and quality, such as sedimentation and gelation of the slurry. Moreover, to dry the solvent in the slurry, a long drying oven is required, which is also a factor in increasing costs.

For this reason, a production method is being considered that uses a resin, such as a polytetrafluoroethylene resin (PTFE) as a binder that forms fibrils by application of a shear force, and does not involve a slurry preparation step or a coating step. In such a method, the binder and the powder component constituting the battery mixture are mixed, and a function as a binder is exhibited by application of a shear force to cause the resin to form fibrils. It is not always necessary to use a solvent to use such a binder, but in order to obtain a battery sheet industrially and efficiently, it is preferred to use a liquid component as a forming aid.

For example, in Patent Literature 2, isopropyl alcohol (IPA) serving as a forming aid is added in a sheet forming step. However, since IPA is not a necessary component in the completed battery, the IPA needs to be completely removed after sheet formation. If the removal of the IPA is insufficient, there is a problem in that a residue within the electrode generates gas, which adversely affects battery performance.

The present disclosure is characterized in that a liquid component that can be used as a component in a liquid electrolytic solution in a battery is added at the forming stage to act as a forming aid. Such liquid component does not adversely affect battery performance even if it remains in the battery. Therefore, this is preferable because there is no need to provide a step of removing the liquid component after forming the sheet. In addition, this is also preferable in terms of the point that since the liquid component acts as a forming aid in the step of forming the sheet, moldability can be improved. The liquid component preferably has a boiling point of 90°C or higher, more preferably 100°C or higher, and further preferably 120°C or higher.

It is preferred that the liquid component includes at least one selected from the group consisting of an ether compound, an ionic liquid, a carboxylic acid ester compound, a nitrile compound, and a carbonate that can be used as a component in the electrolytic solution.

Such liquid components will now be described in detail.

The carbonate may be a cyclic carbonate or a chain carbonate.

The cyclic carbonate may be a non-fluorinated cyclic carbonate or a fluorinated cyclic carbonate.

Examples of the non-fluorinated cyclic carbonate include a non-fluorinated saturated cyclic carbonate, preferably a non-fluorinated saturated alkylene carbonate having an alkylene group of from 2 to 6 carbon atoms, and more preferably a non-fluorinated saturated alkylene carbonate having an alkylene group of from 2 to 4 carbon atoms.

Among these, the non-fluorinated saturated cyclic carbonate is preferably, from the viewpoint of having a high dielectric constant and a suitable viscosity, at least one selected from the group consisting of ethylene carbonate, propylene carbonate, cis-2,3-pentylene carbonate, cis-2,3-butylene carbonate, 2,3-pentylene carbonate, 2,3-butylene carbonate, 1,2-pentylene carbonate, 1,2-butylene carbonate, and butylene carbonate.

The above-described non-fluorinated saturated cyclic carbonates may be used singly or in combinations of two or more thereof in any combination and ratio.

The fluorinated cyclic carbonate may be a fluorinated saturated cyclic carbonate or a fluorinated unsaturated cyclic carbonate.

Among these, the fluorinated saturated cyclic carbonate is preferably one of the following compounds.

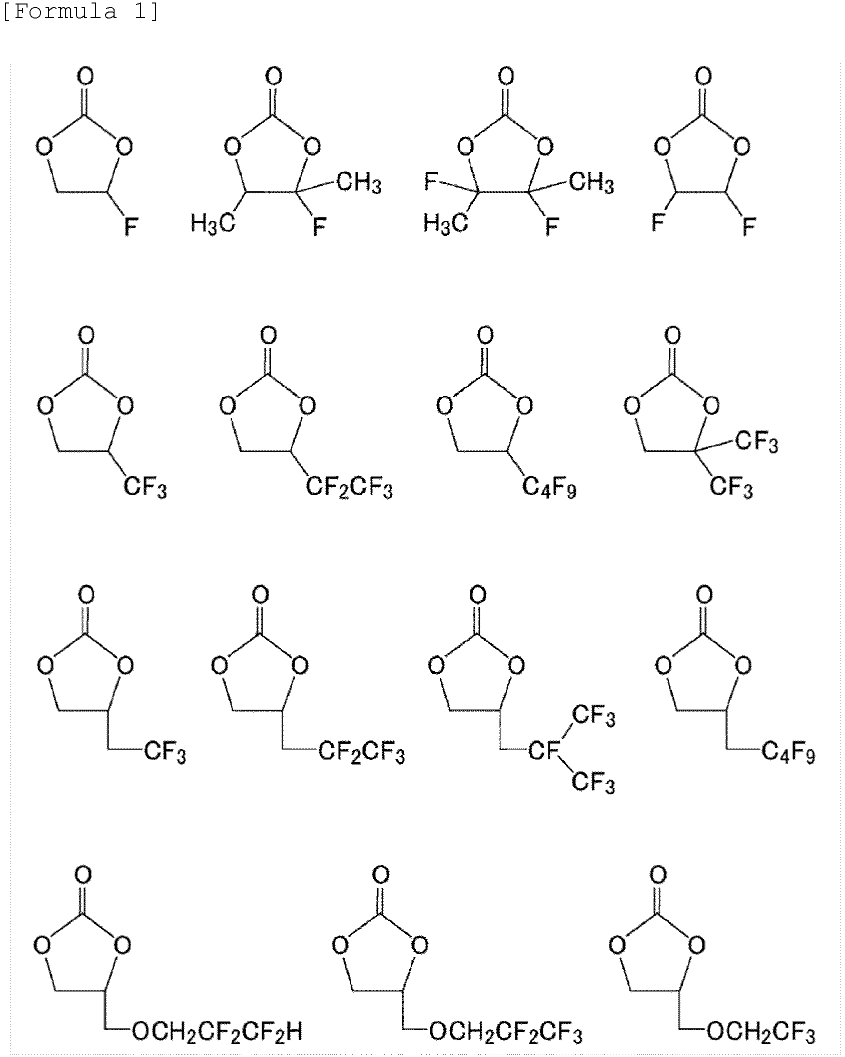

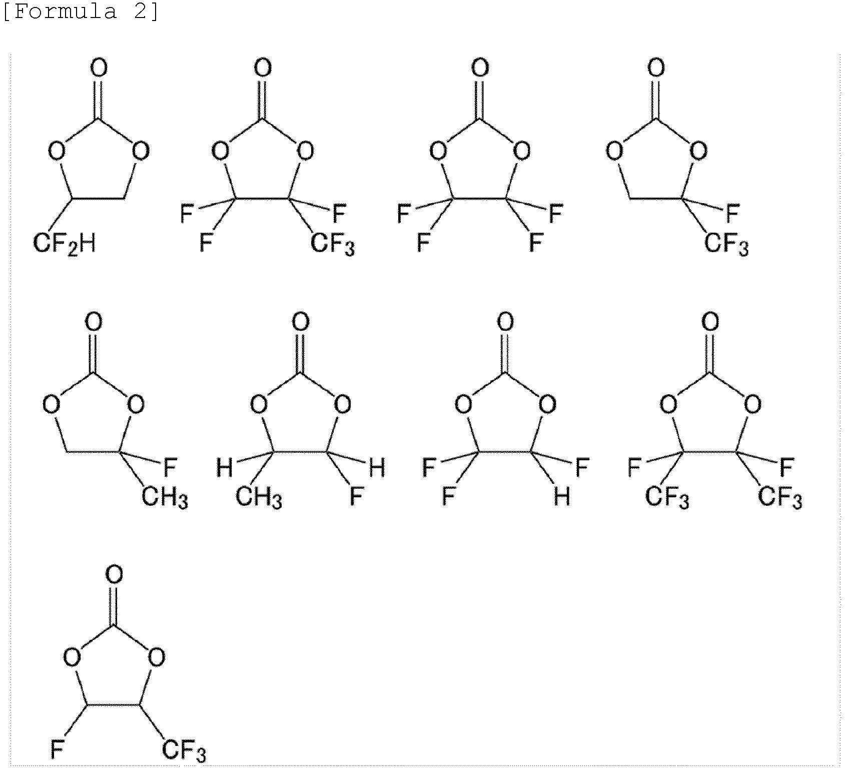

Further examples of the fluorinated saturated cyclic carbonate include trans-4,5-difluoro-1,3-dioxolan-2-one, 5-(1,1-difluoroethyl)-4,4-difluoro-1,3-dioxolan-2-one, 4-methylene-1,3-dioxolan-2-one, 4-methyl-5-trifluoromethyl-1,3-dioxolan-2-one, 4-ethyl-5-fluoro-1,3-dioxolan-2-one, 4-ethyl-5,5-difluoro-1,3-dioxolan-2-one, 4-ethyl-4,5-difluoro-1,3-dioxolan-2-one, 4-ethyl-4,5,5-trifluoro-1,3-dioxolan-2-one, 4,4-difluoro-5-methyl-1,3-dioxolan-2-one, 4-fluoro-5-methyl-1,3-dioxolan-2-one, 4-fluoro-5-trifluoromethyl-1,3-dioxolan-2-one, 4,4-difluoro-1,3-dioxolan-2-one, and the like.

Among these, the fluorinated saturated cyclic carbonate is more preferably fluoroethylene carbonate, difluoroethylene carbonate, trifluoromethylethylene carbonate (3,3,3-trifluoropropylene carbonate), or 2,2,3,3,3-pentafluoropropylethylene carbonate.

The fluorinated unsaturated cyclic carbonate is a cyclic carbonate having an unsaturated bond and a fluorine atom, and is preferably a fluorinated ethylene carbonate derivative substituted with a substituent having an aromatic ring or a carbon-carbon double bond. Specific examples include 4,4-difluoro-5-phenylethylene carbonate, 4,5-difluoro-4-phenylethylene carbonate, 4-fluoro-5-phenylethylene carbonate, 4-fluoro-5-vinylethylene carbonate, 4-fluoro-4-phenylethylene carbonate, 4,4-difluoro-4-vinylethylene carbonate, 4,4-difluoro-4-allylethylene carbonate, 4-fluoro-4-vinylethylene carbonate, 4-fluoro-4,5-diallylethylene carbonate, 4,5-difluoro-4-vinylethylene carbonate, 4,5-difluoro-4,5-divinylethylene carbonate, 4,5-difluoro-4,5-diallylethylene carbonate, and the like.

These fluorinated cyclic carbonates may be used singly or in combinations of two or more thereof in any combination and ratio.

The chain carbonate may be a non-fluorinated chain carbonate or a fluorinated chain carbonate.

Examples of the non-fluorinated chain carbonate include hydrocarbon chain carbonates such as CH₃OCOOCH₃ (dimethyl carbonate: DMC), CH₃CH₂OCOOCH₂CH₃ (diethyl carbonate: DEC), CH₃CH₂OCOOCH₃ (ethyl methyl carbonate: EMC), CH₃OCOOCH₂CH₂CH₃ (methyl propyl carbonate), methyl butyl carbonate, ethyl propyl carbonate, ethyl butyl carbonate, dipropyl carbonate, dibutyl carbonate, methyl isopropyl carbonate, methyl-2-phenyl phenyl carbonate, phenyl-2-phenyl phenyl carbonate, trans-2,3-pentylene carbonate, trans-2,3-butylene carbonate, and ethyl phenyl carbonate. Among these, at least one selected from the group consisting of ethyl methyl carbonate, diethyl carbonate, and dimethyl carbonate is preferred.

These non-fluorinated chain carbonates may be used singly or in combinations of two or more thereof in any combination and ratio.

From the viewpoint of having a low viscosity, the fluorinated chain carbonate is preferably one of the following compounds.

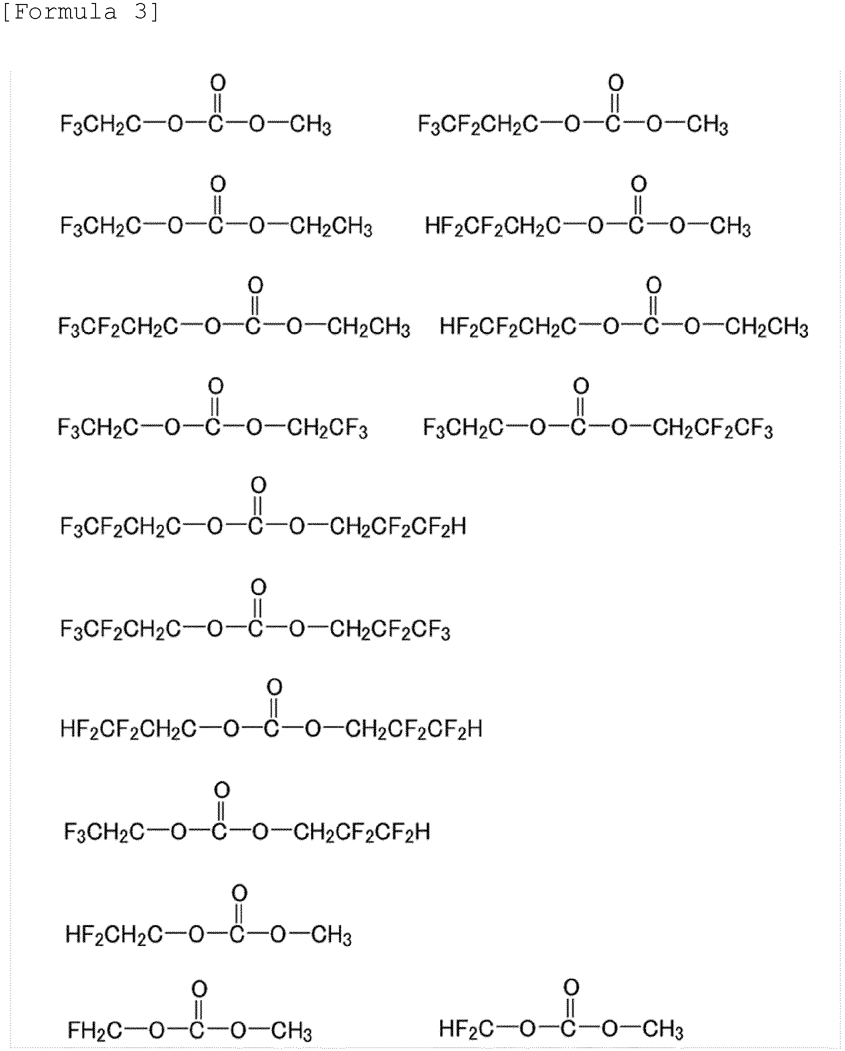

As the fluorinated chain carbonate, methyl 2,2,2-trifluoroethyl carbonate (F₃CH₂COC(=O)OCH₃) is particularly preferred.

These fluorinated chain carbonates may be used singly or in combinations of two or more thereof in any combination and ratio.

As the ether compound, a chain ether having from 2 to 10 carbon atoms or a cyclic ether having from 3 to 6 carbon atoms is preferred.

Examples of the chain ether having from 2 to 10 carbon atoms include dimethyl ether, diethyl ether, di-n-butyl ether, dimethoxymethane, methoxyethoxymethane, diethoxymethane, dimethoxyethane, methoxyethoxyethane, diethoxyethane, ethylene glycol di-n-propyl ether, ethylene glycol di-n-butyl ether, diethylene glycol, diethylene glycol dimethyl ether, pentaethylene glycol, triethylene glycol dimethyl ether, triethylene glycol, tetraethylene glycol, tetraethylene glycol dimethyl ether, diisopropyl ether, and the like.

Further, as the ether compound, a fluorinated ether can also be suitably used.

Examples of the fluorinated ether include a fluorinated ether (I) represented by the following general formula (I):

Rf³-O-Rf⁴ (I)

wherein Rf³ and Rf⁴ are the same or different and are each an alkyl group having from 1 to 10 carbon atoms or a fluorinated alkyl group having from 1 to 10 carbon atoms; however, at least one of Rf³ and Rf⁴ is a fluorinated alkyl group.

By containing the fluorinated ether (I), the flame retardance of the electrolytic solution is improved, and the stability and safety at high temperatures are improved.

In the above general formula (I), it suffices that at least one of Rf³ and Rf⁴ be a fluorinated alkyl group having from 1 to 10 carbon atoms, but from the viewpoint of a much greater improvement in the flame retardance of the electrolytic solution and the stability and safety at high temperatures, it is preferred that Rf³ and Rf⁴ are both a fluorinated alkyl group having from 1 to 10 carbon atoms. In this case, Rf³ and Rf⁴ may be the same or different from each other.

Among these, it is more preferred that Rf³ and Rf⁴ are the same or different, Rf³ is a fluorinated alkyl group having from 3 to 6 carbon atoms, and Rf⁴ is a fluorinated alkyl group having from 2 to 6 carbon atoms.

If the total number of carbon atoms of Rf³ and Rf⁴ is too small, the boiling point of the fluorinated ether will be too low, and if the number of carbon atoms of Rf³ or Rf⁴ is too large, the solubility of the electrolyte salt will decrease, adverse effects also start to appear in the miscibility with other solvents, and also the rate characteristics deteriorate due to an increase in the viscosity. When Rf³ has 3 or 4 carbon atoms and Rf⁴ has 2 or 3 carbon atoms, such a case is advantageous in that the boiling point and rate characteristics are excellent.

The fluorinated ether (I) preferably has a fluorine content of 40 to 75% by mass. When the fluorine content is in this range, the balance between non-flammability and miscibility is particularly excellent. Further, a fluorine content in this range is also preferred from the viewpoint of good oxidation resistance and safety.

The lower limit of the fluorine content is more preferably 45% by mass, further preferably 50% by mass, and particularly preferably 55% by mass. The upper limit is more preferably 70% by mass, and further preferably 66% by mass.

The fluorine content of the fluorinated ether (I) is a value calculated as {(number of fluorine atoms × 19)/molecular weight of the fluorinated ether (I)} × 100 (%), based on the structural formula of the fluorinated ether (I).

Examples of Rf³ include CF₃CF₂CH₂-, CF₃CFHCF₂-, HCF₂CF₂CF₂-, HCF₂CF₂CH₂-, CF₃CF₂CH₂CH₂-, CF₃CFHCF₂CH₂-, HCF₂CF₂CF₂CF₂-, HCF₂CF₂CF₂CH₂-, HCF₂CF₂CH₂CH₂-, HCF₂CF(CF₃)CH₂-, and the like. Further, examples of Rf⁴ include -CH₂CF₂CF₃, -CF₂CFHCF₃, -CF₂CF₂CF₂H, -CH₂CF₂CF₂H, - CH₂CH₂CF₂CF₃, -CH₂CF₂CFHCF₃, -CF₂CF₂CF₂CF₂H, -CH₂CF₂CF₂CF₂H, - CH₂CH₂CF₂CF₂H, -CH₂CF(CF₃)CF₂H, -CF₂CF₂H, -CH₂CF₂H, -CF₂CH₃, and the like.

Specific examples of the fluorinated ether (I) include HCF₂CF₂CH₂OCF₂CF₂H, CF₃CF₂CH₂OCF₂CF₂H, HCF₂CF₂CH₂OCF₂CFHCF₃, CF₃CF₂CH₂OCF₂CFHCF₃, C₆F₁₃OCH₃, C₆F₁₃OC₂H₅, C₈F₁₇OCH₃, C₈F₁₇OC₂H₅, CF₃CFHCF₂CH(CH₃)OCF₂CFHCF₃, HCF₂CF₂OCH(C₂H₅)₂, HCF₂CF₂OC₄H₉, HCF₂CF₂OCH₂CH(C₂H₅)₂, HCF₂CF₂OCH₂CH(CH₃)₂, and the like.

Among these, a fluorinated ether (I) having excellent polarizability and a high boiling point can be provided by including HCF₂- or CF₃CFH- at one or both ends of the ether. The boiling point of the fluorinated ether (I) is preferably from 67 to 120°C. More preferably, the temperature is 80°C or higher, and further preferably 90°C or higher.

Examples of such a fluorinated ether (I) include one or more of CF₃CH₂OCF₂CFHCF₃, CF₃CF₂CH₂OCF₂CFHCF₃, HCF₂CF₂CH₂OCF₂CFHCF₃, HCF₂CF₂CH₂OCH₂CF₂CF₂H, CF₃CFHCF₂CH₂OCF₂CFHCF₃, HCF₂CF₂CH₂OCF₂CF₂H, CF₃CF₂CH₂OCF₂CF₂H, and the like.

Examples of the cyclic ether having from 3 to 6 carbon atoms include 1,2-dioxane, 1,3-dioxane, 2-methyl-1,3-dioxane, 4-methyl-1,3-dioxane, 1,4-dioxane, metaformaldehyde, 2-methyl-1,3-dioxolane, 1,3-dioxolane, 4-methyl-1,3-dioxolane, 2-(trifluoroethyl)dioxolane 2,2-bis(trifluoromethyl)-1,3-dioxolane, and the like, and fluorinated compounds thereof.

The cyclic ether having from 3 to 6 carbon atoms may also be an ether compound such as dioxolane, dioxane, 2,5,8,11-tetraoxadodecane, 2,5,8,11,14-pentaoxapentadecane, ethoxymethoxyethane, trimethoxymethane, glyme, and ethyl monoglyme.

Further, an ionic liquid can also be used as the liquid component. An "ionic liquid" is a liquid composed of ions that are a combination of an organic cation and an anion.

Examples of the organic cation include, but are not limited to, an imidazolium ion such as a dialkylimidazolium cation and a trialkylimidazolium cation; a tetraalkylammonium ion; an alkylpyridinium ion; a dialkylpyrrolidinium ion; and a dialkylpiperidinium ion. Specific examples include 1-methyl-1-propylpyrrolidinium and the like.

Examples of the anion serving as a counter to these organic cations used include, but are not limited to, a PF₆ anion, a PF₃(C₂F₅)₃ anion, a PF₃(CF₃) ₃ anion, a BF₄ anion, a BF₂(CF₃)₂ anion, a BF₃(CF₃) anion, a bisoxalatoborate anion, a P(C₂O₄)F₂ anion, a Tf (trifluoromethanesulfonyl) anion, a Nf (nonafluorobutanesulfonyl) anion, a bis(fluorosulfonyl)imide anion, a bis(trifluoromethanesulfonyl)imide anion, a bis (pentafluoroethanesulfonyl) imide anion, a dicyanoamine anion, and a halide anion.

The ionic liquid is preferably at least one selected from a combination of a 1-butyl-3-methylimidazolium (BMI) cation or an N-methyl-N-butylpyrrolidium (Pyr14) cation as the organic cation and a BF₄ anion, a bis(fluorosulfonyl)imide (FSI) anion, or a bis(trifluoromethanesulfonyl)imide (TFSI) anion as the anion.

Among these, FSI and TFSI are particularly preferred.

The carboxylic acid ester compound may be a cyclic carboxylic acid ester or a chain carboxylic acid ester.

The cyclic carboxylic acid ester may be a non-fluorinated cyclic carboxylic acid ester or a fluorinated cyclic carboxylic acid ester.

Examples of the non-fluorinated cyclic carboxylic acid ester include a non-fluorinated saturated cyclic carboxylic acid ester, and a non-fluorinated saturated cyclic carboxylic acid ester having an alkylene group of from 2 to 4 carbon atoms is preferred.

Specific examples of the non-fluorinated saturated cyclic carboxylic acid ester having an alkylene group of from 2 to 4 carbon atoms include β-propiolactone, γ-butyrolactone, ε-caprolactone, δ-valerolactone, and α-methyl-γ-butyrolactone. Among these, γ-butyrolactone and δ-valerolactone are particularly preferred from the viewpoint of improving the degree of lithium ion dissociation and improving load characteristics.

These non-fluorinated saturated cyclic carboxylic acid esters may be used singly or in combinations of two or more thereof in any combination and ratio.

When the non-fluorinated saturated cyclic carboxylic acid ester is included, the content of the non-fluorinated saturated cyclic carboxylic acid ester is, relative to the solvent, preferably 0 to 90% by volume, more preferably 0.001 to 90% by volume, further preferably 1 to 60% by volume, and particularly preferably 5 to 40% by volume.

The chain carboxylic acid ester may be a non-fluorinated chain carboxylic acid ester or a fluorinated chain carboxylic acid ester.

Examples of the non-fluorinated chain carboxylic acid ester include methyl acetate, ethyl acetate, propyl acetate, butyl acetate, methyl propionate, ethyl propionate, propyl propionate, butyl propionate, tert-butyl propionate, tert-butyl butyrate, sec-butyl propionate, sec-butyl butyrate, n-butyl butyrate, methyl pyrophosphate, ethyl pyrophosphate, tert-butyl formate, tert-butyl acetate, sec-butyl formate, sec-butyl acetate, n-hexyl pivalate, n-propyl formate, n-propyl acetate, n-butyl formate, n-butyl pivalate, n-octyl pivalate, ethyl 2-(dimethoxyphosphoryl)acetate, ethyl 2-(dimethylphosphoryl)acetate, ethyl 2-(diethoxyphosphoryl)acetate, ethyl 2-(diethylphosphoryl)acetate, isopropyl propionate, isopropyl acetate, ethyl formate, ethyl 2-propynyl oxalate, isopropyl formate, isopropyl butyrate, isobutyl formate, isobutyl propionate, isobutyl butyrate, isobutyl acetate, and the like.

Preferred among these are butyl acetate, methyl propionate, ethyl propionate, propyl propionate, and butyl propionate, and particularly preferred are ethyl propionate and propyl propionate.

These non-fluorinated chain carboxylic acid esters may be used singly or in combinations of two or more thereof in any combination and ratio.

From the viewpoint of having good miscibility with other solvents and good oxidation resistance, the fluorinated chain carboxylic acid ester is preferably a fluorinated chain carboxylic acid ester represented by the following general formula:

Rf³¹-COORf³²

wherein Rf³¹ is a fluorinated alkyl group having from 1 to 4 carbon atoms, and Rf³² is an alkyl group having from 1 to 4 carbon atoms that optionally contains a fluorine atom.

Examples of Rf³¹ include HCF₂-, CF₃-, CF₃CF₂-, HCF₂CF₂-, CH₃CF₂-, CF₃CH₂-, and the like, and from the viewpoint of having good viscosity and oxidation resistance, from among these Rf³¹ is particularly preferably HCF₂-, CF₃-, CF₃CF₂-, or CF₃CH₂-.

Examples of Rf³² include CH₃-, C₂H₅-, CF₃-, CF₃CF₂-, (CF₃)₂CH-, CF₃CH₂-, CF₃CH₂CH₂-, CF₃CFHCF₂CH₂-, C₂F₅CH₂-, CF₂HCF₂CH₂-, C₂F₅CH₂CH₂-, CF₃CF₂CH₂-, CF₃CF₂CF₂CH₂-, and the like, and from the viewpoint of having good miscibility with other solvents, from among these Rf³² is particularly preferably CH₃-, C₂H₅-, CF₃CH₂-, or CF₃CH₂CH₂-.

Specific examples of the fluorinated chain carboxylic acid ester include one or two or more of CF₃CH₂C(=O)OCH₃ (methyl 3,3,3-trifluoropropionate), HCF₂C(=O)OCH₃ (methyl difluoroacetate), HCF₂C(=O)OC₂H₅ (ethyl difluoroacetate), CF₃C(=O)OCH₂CH₂CF₃, CF₃C(=O)OCH₂C₂F₅, CF₃C(=O)OCH₂CF₂CF₂H (2, 2, 3, 3-tetrafluoropropyl trifluoroacetate), CF₃C(=O)OCH₂CF₃, CF₃C(=O)OCH(CF₃)₂, ethyl pentafluorobutyrate, methyl pentafluoropropionate, ethyl pentafluoropropionate, methyl pentafluoroisobutyrate, isopropyl trifluorobutyrate, ethyl trifluoroacetate, tert-butyl trifluoroacetate, n-butyl trifluoroacetate, methyl tetrafluoro-2-(methoxy)propionate, 2,2-difluoroethyl acetate, 2,2,3,3-tetrafluoropropyl acetate, 2,2,2-trifluoroethyl acetate, 1H,1H-heptafluorobutyl acetate, methyl 4,4,4-trifluorobutyrate, ethyl 4,4,4-trifluorobutyrate, ethyl 3,3,3-trifluoropropionate, 3,3,3-trifluoropropyl 3,3,3-trifluoropropionate, ethyl 3-(trifluoromethyl)butyrate, methyl 2,3,3,3-tetrafluoropropionate, butyl 2,2-difluoroacetate, methyl 2,2,3,3-tetrafluoropropionate, methyl 2-(trifluoromethyl)-3,3,3-trifluoropropionate, methyl heptafluorobutyrate, and the like.

Among these, from the viewpoint of having good miscibility with other solvents and good rate characteristics, preferred are CF₃CH₂C(=O)OCH₃, HCF₂C(=O)OCH₃, HCF₂C(=O)OC₂H₅, CF₃C(=O)OCH₂C₂F₅, CF₃C(=O)OCH₂CF₂CF₂H, CF₃C(=O)OCH₂CF₃, CF₃C(=O)OCH(CF₃)₂, ethyl pentafluorobutyrate, methyl pentafluoropropionate, ethyl pentafluoropropionate, methyl pentafluoroisobutyrate, isopropyl trifluorobutyrate, ethyl trifluoroacetate, tert-butyl trifluoroacetate, n-butyl trifluoroacetate, methyl tetrafluoro-2-(methoxy)propionate, 2,2-difluoroethyl acetate, 2,2,3,3-tetrafluoropropyl acetate, 2,2,2-trifluoroethyl acetate, 1H,1H-heptafluorobutyl acetate, methyl 4,4,4-trifluorobutyrate, ethyl 4,4,4-trifluorobutyrate, ethyl 3,3,3-trifluoropropionate, 3,3,3-trifluoropropyl 3,3,3-trifluoropropionate, ethyl 3-(trifluoromethyl)butyrate, methyl 2,3,3,3-tetrafluoropropionate, butyl 2,2-difluoroacetate, methyl 2,2,3,3-tetrafluoropropionate, methyl 2-(trifluoromethyl)-3,3,3-trifluoropropionate, and methyl heptafluorobutyrate, more preferred are CF₃CH₂C(=O)OCH₃, HCF₂C(=O)OCH₃, and HCF₂C(=O)OC₂H₅, and particularly preferred are CF₃CH₂C(=O)OCH₃ and HCF₂C(=O)OCH₃.

These fluorinated chain carboxylic acid esters may be used singly or in combinations of two or more thereof in any combination and ratio.

The nitrile compound is preferably a dinitrile or a tricarbonitrile. Specific examples of the dinitrile include malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, 2,3,3-trimethylsuccinonitrile, 2,2,3,3-tetramethylsuccinonitrile, 2,3-diethyl-2,3-dimethylsuccinonitrile, 2,2-diethyl-3,3-dimethylsuccinonitrile, bicyclohexyl-1,1-dicarbonitrile, bicyclohexyl-2,2-dicarbonitrile, bicyclohexyl-3,3-dicarbonitrile, 2,5-dimethyl-2,5-hexanedicarbonitrile, 2,3-diisobutyl-2,3-dimethylsuccinonitrile, 2,2-diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile, 3,3'-(ethylenedithio)dipropionitrile, 3,9-bis(2-cyanoethyl)-2,4,8,10-tetraoxaspiro[5,5]undecane, butanenitrile, phthalonitrile, and the like. Particularly preferred among these are succinonitrile, glutaronitrile, and adiponitrile.

Specific examples of the tricarbonitrile include pentanetricarbonitrile, propanetricarbonitrile, 1,3,5-hexanetricarbonitrile, 1,3,6-hexanetricarbonitrile, heptanetricarbonitrile, 1,2,3-propanetricarbonitrile, 1,3,5-pentanetricarbonitrile, cyclohexanetricarbonitrile, triscyanoethylamine, triscyanoethoxypropane, tricyanoethylene, tris(2-cyanoethyl)amine, and the like. Particularly preferred is 1,3,6-hexanetricarbonitrile or cyclohexanetricarbonitrile, and most preferred is cyclohexanetricarbonitrile.

These nitrile compounds may be used singly, or in combinations of two or more thereof in any combination and ratio.

From the viewpoint of suppressing gas generation and improving battery characteristics such as reducing resistance, the liquid component is, among the above-described components, preferably at least one selected from the group consisting of an ether compound, an ionic liquid, a carboxylic acid ester compound, a nitrile compound, and a carbonate, and most preferably is a carbonate.

The content of the liquid component is preferably 1 to 30% by mass relative to the total amount of the mixture composition for a secondary battery electrode. The lower limit of the content of the liquid component is preferably 1% by mass, more preferably 2% by mass, and further preferably 3% by mass, and the upper limit is preferably 30% by mass, more preferably 25% by mass, and further preferably 20% by mass.

The liquid component has a water content of preferably 500 ppm or less, and more preferably 300 ppm or less.

The mixture composition for a secondary battery electrode of the present disclosure contains a binder. Examples of the binder are not limited, and may include conventionally known binders, but the binder is preferably a resin that forms fibrils by application of a shear force. Specifically, examples thereof can include a polytetrafluoroethylene resin (hereinafter sometimes referred to as PTFE) or an ultra-high molecular weight polyethylene, and PTFE is preferred.

It is known that when shear stress is applied to PTFE in a particulate state, the PTFE readily forms fibrils. By utilizing this property of readily forming fibrils, PTFE can be used as a binder. That is, the fibrillated PTFE entangles other powder components and the like to bind the powder components, thereby acting as a binder upon forming of the powder components.

More preferably, the PTFE is powdered PTFE. Since a PTFE powder is used as a raw material instead of a PTFE water dispersion, the amount of moisture derived from the raw material in the electrode mixture is low, and so there are no problems caused by moisture being mixed in the electrode mixture. As a result, gas generation is reduced, and there is also the advantage that battery performance can be improved. Further, a battery with good input/output characteristics can be obtained.

In the present disclosure, the PTFE is not limited, and may be a homopolymer, or a copolymer that can form fibrils.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

It is noted that "PTFE powder" as described above does not refer to a dispersed state mixed with a liquid medium, but means a solid state as a powder. By carrying out production using PTFE in such a state in which a liquid medium is not present, the object of the present disclosure can be suitably achieved.

It is preferred that the powdered PTFE serving as a raw material for preparing the mixture composition for a secondary battery electrode of the present disclosure has a moisture content of 500 ppm or less.

The moisture content of 500 ppm or less is preferred from the viewpoint of reducing the amount of gas that is generated.

More preferably, the moisture content is 300 ppm or less.

### [Measurement of moisture content]

Using a Karl Fischer moisture meter (ADP-511/MKC-510N, manufactured by Kyoto Electronics Industry Manufacturing Co., Ltd.) equipped with a boat-type moisture vaporizer, the moisture content was measured by heating to 210°C with the moisture vaporizer and measuring the vaporized moisture. Nitrogen gas was flowed as the carrier gas at a flow rate of 200 mL/min, and the measurement time was 30 min. Chem-Aqua was used as the Karl Fischer reagent. The sample amount was 1.5 g.

It is preferred that the powdered PTFE serving as a raw material for preparing the mixture composition for a secondary battery electrode of the present disclosure has a standard specific gravity of 2.11 to 2.20. Having a standard specific gravity within the above range is advantageous in that an electrode mixture sheet having a high strength can be produced. The lower limit of the standard specific gravity is more preferably not less than 2.12. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of polytetrafluoroethylene resin having a secondary particle size of 500 µm or more. When the PTFE having a secondary particle size of 500 µm or more is within the above range, there is an advantage that a high-strength mixture sheet can be produced.

By using PTFE with a secondary particle size of 500 µm or more, it is possible to obtain a mixture sheet with lower resistance and high toughness.

The lower limit of the secondary particle size is more preferably 300 µm, and further preferably 350 µm. The upper limit of the secondary particle size is more preferably not more than 700 µm, and further preferably not more than 600 µm. The secondary particle size can be determined, for example, by a sieving method.

The powdered PTFE has an average primary particle size of preferably 150 nm or more because this allows an electrode mixture sheet having higher strength and excellent homogeneity to be obtained. More preferably, the average primary particle size is 180 nm or more, further preferably 210 nm or more, and particularly preferably 220 nm or more.

The larger the average primary particle size of the PTFE, the more the paste extrusion pressure can be suppressed and the better the moldability is when extrusion-forming a paste using the powder. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a modified polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powdered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

Examples of commonly sold PTFE include F-104, F-106, F-107, F-104C, F-121, F-201, F-205, F-208, F-302, and the like, which are manufactured by Daikin Industries, Ltd., 60X, 601X, 602X, 605XTX, 613AX, 62X, 62NX, 62XTX, 640XTX, 641XTX, 650XTX, 669X, 669NX, 6CX, 6CNX, CFP6000X, 6J, 6CJ, 62J, 640J, 641J, and the like, which are manufactured by Chemours, TF2029, TF2025Z, TF2053Z, TF2073Z, TF2001Z, TF2071USZ, TF2072Z, and the like, which are manufactured by 3M, CD145, CD123, CD126E, CD097, CD084E, CD086EL, CD086EH, CD090E, CD122E, CD141E, CD127E, and the like, which are manufactured by AGC, and DF681F, DF680F, DF330F, DF291F, DF230F, DF210F, DF132F, DF130F, and DF120F, which are manufactured by Solvay.

Examples of commonly sold ultra-high molecular weight polyethylene include TIVAR UHMW-PE and the like, manufactured by Mitsubishi Chemical Advanced Materials, and HI-ZEX MILLION, manufactured by Mitsui Chemicals.

In the electrode mixture of the present disclosure, it is preferred that the PTFE has a fibrous structure with a fibril diameter (median value) of 70 nm or less. That is, PTFE having such a small fibril diameter is present in the electrode mixture, and this has the effect of binding the powders of the components constituting the electrode mixture and of imparting flexibility, and thereby achieving the object of the present invention.

The fibril diameter (median value) is a value measured by the following method.
(1) Using a scanning electron microscope (Model S-4800, manufactured by Hitachi, Ltd.), an enlarged photograph (7,000x) of the electrode mixture sheet is taken to obtain an image.
(2) Two lines equidistant from each other are drawn on the image in the horizontal direction to divide the image into three equal parts.
(3) The diameter of each PTFE fiber on the upper straight line is measured at three locations, and the average value is taken as the PTFE fiber diameter. The three locations to be measured are the intersection between the PTFE fiber and the straight line, and the locations 0.5 µm above and below the intersection (PTFE primary particles not formed into fibrils are excluded).
(4) The task of (3) above is then carried out for all the PTFE fibers on the lower straight line.
(5) Starting from the first image, the electrode mixture sheet is moved 1 mm in the right direction of the screen, photographed again, and the diameter of the PTFE fibers is measured according to the above (3) and (4). This is repeated until the number of fibers measured exceeds 80, and then the measurement is terminated.
(6) The median value of the diameters of all the PTFE fibers measured above is taken as the size of the fibril diameter.

The fibril diameter (median value) is more preferably 65 nm or less. Excessive fibril formation tends to result in loss of flexibility. Although the lower limit is not limited, from the viewpoint of strength, the lower limit is preferably not less than 15 nm.

Examples of the method for obtaining PTFE having the above-described fibril diameter (median value) include, but are not limited to, a method including a step (1) of mixing a raw material composition containing a conductive aid, a binder, and a liquid component that can be used as a component in a liquid electrolytic solution, a step (2) of promoting formation of fibrils of the raw material composition obtained in step (1) to produce granules, and a step (3) of rolling the granulated composition obtained in step (2) into a sheet shape.

In such a method, for example, by setting the mixing condition of the raw material composition to 15,000 rpm or less in step (1), the fibrillation of the PTFE can be advanced while maintaining flexibility, and by controlling the shear stress to be applied, the fibril diameter (median value) of the PTFE can be made 70 nm or less.

Further, it is also preferable to have after the step (3) a step (4) of applying a larger load to the obtained roll sheet and rolling into a thinner sheet. It is also preferred to repeat step (4).

In addition, after the step (3) or step (4), the fibril diameter can be adjusted by having a step (5) of coarsely crushing the obtained roll sheet, then again forming into a bulk shape and rolling into a sheet. The step (5) is preferably repeated, for example, 1 or more times and 12 or less times.

That is, by applying the shear stress, the PTFE powder is turned into fibrils, which become entangled with the powder components such as the electrode active materials, thereby producing the electrode mixture. It is noted that the production method will be described later.

In the mixture composition for a secondary battery electrode of the present disclosure, the content of the binder is, as the proportion of the binder in the mixture composition for a secondary battery electrode, usually 0.1% by mass or more, preferably 0.5% by mass or more, and further preferably 0.8% by mass or more, and is usually 50% by mass or less, preferably 30% by mass or less, further preferably 10% by mass or less, and most preferably 5% by mass or less. If the proportion of the binder is too low, the electrode mixture active material cannot be sufficiently retained, resulting in the electrode mixture sheet having insufficient mechanical strength, which can cause battery performance such as cycle characteristics to deteriorate. On the other hand, if the proportion of the binder is too high, this can lead to a decrease in battery capacity and electric conductivity.

The mixture composition for a secondary battery electrode of the present disclosure further contains a conductive aid and/or an electrode active material.

The electrode active material, conductive aid, and the like will be described below.

### (Electrode active material)

The positive electrode active material is not limited as long as it can electrochemically absorb and desorb alkali metal ions. For example, a material containing an alkali metal and at least one transition metal is preferred. Specific examples include alkali metal-containing transition metal composite oxides, alkali metal-containing transition metal phosphate compounds, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
a lithium-manganese spinel composite oxide represented by the formula:

   MₐMn_{2-b}M¹_{b}O₄

   wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
a lithium-nickel composite oxide represented by the formula:

   MNi_{1-c}M²cO₂

   wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
a lithium-cobalt composite oxide represented by the formula:

   MCo_{1-d}M³_{d}O₂

   wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕCoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g}

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃ and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx[Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which Li₂MnO₃ is dissolved as a solid solution in a base of LiNiO₂ or LiCoO₂ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5% by mass, based on the total of the positive electrode active material and lithium phosphate. The upper limit is preferably not more than 10% by mass, more preferably not more than 8% by mass, and further preferably not more than 5% by mass, based on the total of the positive electrode active material and lithium phosphate.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the electrolytic solution at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tap density of the positive electrode active material is preferably 0.5 g/cm³ or more, more preferably 0.8 g/cm³ or more, and further preferably 1.0 g/cm³ or more. If the tap density of the positive electrode active material is lower than this lower limit, the amount of dispersion medium required for forming the positive electrode active material layer may increase, the required amounts of the conductive material and the binder may increase, the filling ratio of the positive electrode active material to the positive electrode active material layer may be limited, and the battery capacity may be limited. By using a complex oxide powder with a high tap density, a high density positive electrode active material layer can be formed. Generally, the higher the tap density, the better. However, although there is no upper limit, if the tap density is too large, the diffusion of lithium ions in the positive electrode active material layer using the electrolytic solution as a medium becomes rate-determining, and the load characteristics tend to deteriorate. Therefore, the upper limit is preferably not more than 4.0 g/cm³, more preferably not more than 3.7 g/cm³, and further preferably not more than 3.5 g/cm³.

In the present disclosure, the tap density is determined as the powder filling density (tap density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tap density product, and if the median diameter d50 exceeds the upper limit, it takes time for the lithium to diffuse within the particles, which may result in problems such as a decrease in battery performance. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tap density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When an electrode mixture sheet composed of the mixture composition for a secondary battery electrode of the present disclosure is used as a large lithium ion secondary battery for a hybrid automobile or a distributed power source, a high output is required, and so it is preferred that the particles of the positive electrode active material are mainly secondary particles.

The particles of the positive electrode active material preferably include 0.5 to 7.0% by volume of fine particles having an average secondary particle size of 40 µm or less and an average primary particle size of 1 µm or less. By containing fine particles with an average primary particle size of 1 µm or less, the contact area with the electrolytic solution increases, so the diffusion of lithium ions between the electrode mixture and the electrolytic solution can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNO₃ is added, and then sintering is carried out at a high temperature to obtain the active material.

To produce the positive electrode, the above-described positive electrode active materials may be used singly, or in combinations of two or more thereof having different compositions in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn are replaced with another transition metal or the like, or a combination of LiFePO₄ and LiCoO₂ or a material in which a part of the Co are replaced with another transition metal or the like.

From the viewpoint of high battery capacity, the content of the positive electrode active material in the positive electrode mixture is preferably 50 to 99.5% by mass, and more preferably 80 to 99% by mass.

Further, the content in the positive electrode active material layer is preferably 80% by mass or more, more preferably 82% by mass or more, and particularly preferably 84% by mass or more. The upper limit is preferably not more than 99% by mass, and more preferably not more than 98% by mass. If the content of the positive electrode active material in the positive electrode active material layer is low, the electric capacity may be insufficient. Conversely, if the content is too high, the strength of the positive electrode may be insufficient.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly suitably used.

The negative electrode active material used in the present disclosure suitably contains silicon as a constituent element. By including silicon as a constituent element, a high capacity battery can be produced.

The material containing silicon is preferably silicon particles, particles having a structure in which fine particles of silicon are dispersed in a silicon-based compound, silicon oxide particles represented by the general formula SiOx (0.5≤x≤1.6), or mixtures thereof. By using such a material, a negative electrode mixture for a lithium-ion secondary battery having higher initial charge/discharge efficiency, higher capacity, and better cycle characteristics can be obtained.

The silicon oxide of the present disclosure is a general term for amorphous silicon oxide, and silicon oxide before disproportionation is represented by the general formula SiOx (0.5≤x≤1.6). x is preferably 0.8≤x<1.6, and more preferably 0.8≤x<1.3. This silicon oxide can be obtained, for example, by cooling and precipitating silicon monoxide gas produced by heating a mixture of silicon dioxide and metal silicon.

Particles having a structure in which fine particles of silicon are dispersed in a silicon-based compound can be obtained, for example, by firing a mixture of fine particles of silicon and a silicon-based compound, or by heat treating silicon oxide particles before disproportionation represented by the general formula SiOx at a temperature of 400°C or higher, suitably 800 to 1,100°C, in an inert, non-oxidizing atmosphere such as argon to carry out a disproportionation reaction. In particular, the material obtained by the latter method is suitable because the silicon microcrystals are uniformly dispersed. As a result of the disproportionation reaction, the size of silicon nanoparticles can be adjusted to 1 to 100 nm. The silicon oxide in the particles having a structure in which silicon nanoparticles are dispersed in silicon oxide is preferably silicon dioxide. It is also noted that the fact that silicon nanoparticles (crystals) are dispersed in amorphous silicon oxide can be confirmed by a transmission electron microscope.

The physical properties of the silicon-containing particles can be appropriately selected depending on the desired composite particles. For example, the average particle size is preferably 0.1 to 50 µm, and the lower limit is more preferably 0.2 µm or more, and further preferably 0.5 µm or more. The upper limit is more preferably 30 µm or less, and further preferably 20 µm or less. The average particle size in the present disclosure is expressed as a weight average particle size as determined by particle size distribution measurement using a laser diffraction method.

The BET specific surface area is preferably 0.5 to 100 m²/g, and more preferably 1 to 20 m²/g. If the BET specific surface area is 0.5 m²/g or more, there is no risk of a deterioration in battery characteristics due to a decrease in adhesiveness when coated on the electrode. Further, if the BET specific surface area is 100 m²/g or less, the proportion of silicon dioxide on the particle surface increases, and there is no risk of a decrease in battery capacity when used as a negative electrode material for a lithium ion secondary battery.

By covering the silicon-containing particles with carbon, electric conductivity is imparted, and battery characteristics are improved. Examples of methods for imparting electric conductivity include mixing with electrically conductive particles such as graphite, covering the surface of the silicon-containing particles with a carbon film, and combining both such methods. A method of covering with a carbon film is preferred, and a chemical vapor deposition (CVD) method is more preferred.

To increase the capacity of the obtained electrode mixture, the content of the negative electrode active material in the mixture composition for a secondary battery electrode is preferably 40% by mass or more, more preferably 50% by mass or more, and particularly preferably 60% by mass or more. The upper limit is preferably not more than 99% by mass, and more preferably not more than 98% by mass.

### (Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. These may be used singly, or in combinations of two or more thereof in any combination and ratio.

The conductive aid is used such that it has a content in the mixture composition for a secondary battery electrode of usually 0.01% by mass or more, preferably 0.1% by mass or more, and more preferably 1% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Other components)

The mixture composition for a secondary battery electrode may further include a thermoplastic resin. Examples of the thermoplastic resin include vinylidene fluoride, polypropylene, polyethylene, polystyrene, polyethylene terephthalate, and polyethylene oxide. These may be used singly, or in combinations of two or more thereof in any combination and ratio. Further, a cellulose derivative such as carboxymethylcellulose, polyacrylic acid, guar gum, xanthan gum, and the like may be included as a binding aid. By including these components, the strength of the mixture sheet and the adhesion to the current collector can be increased.

Further, the mixture composition for a secondary battery electrode may contain a component used as an electrolytic solution component other than the liquid component that can be used as a component in the liquid electrolytic solution. That is, since the electrolytic solution is injected into the battery after the electrode mixture is formed, the components of such an electrolytic solution may be added to the electrode mixture in advance.

Thus, the components used in the mixture composition for a secondary battery electrode are not limited, and examples thereof may include each of the components described in detail below, but in particular, components that can be blended with the electrolyte salt can be used. When blending with the electrolyte salt, the blending amount is preferably 3.0% by mass or less relative to the total amount of the mixture composition for a secondary battery electrode.

Examples of the electrolytic solution components that can be blended in the mixture composition for a secondary battery electrode are not limited, and each of the components of the electrolytic solution described in detail below can be blended.

When the mixture composition for a secondary battery electrode contains an electrolyte salt, the entire amount required for the battery may be added to the mixture composition for a secondary battery electrode, or only a part of the amount may be added and the residual quantity may be supplied by injecting the electrolytic solution.

The proportion of the other components to the electrode active material is in the range of usually 0.01% by mass or more, preferably 0.05% by mass or more, and more preferably 0.10% by mass or more, and is in the range of usually in 3.0% by mass or less, preferably 2.5% by mass or less, and more preferably 2.0% by mass or less. By adding a thermoplastic resin, the mechanical strength of the electrode can be improved. Further, if this range is exceeded, the proportion of the electrode active material in the electrode mixture will decrease, which may cause problems such as a decrease in battery capacity and an increase in resistance between active materials.

The mixture composition for a secondary battery electrode of the present disclosure has a moisture content of preferably 500 ppm or less, and more preferably 300 ppm or less.

In the mixture composition for a secondary battery electrode of the present disclosure, the content of liquid components other than liquid components that can be used as components in the liquid electrolytic solution is preferably 500 ppm or less, and more preferably 300 ppm or less.

The mixture composition for a secondary battery electrode of the present disclosure can be used as an electrode mixture for a secondary battery. In particular, the mixture composition for a secondary battery electrode of the present disclosure is suitable for a lithium ion secondary battery.

When the mixture composition for a secondary battery electrode of the present disclosure is used for a secondary battery, it is usually used in the form of a sheet.

The secondary battery may be a battery having an electrolytic solution or may be a solid battery. Preferably, the secondary battery is a battery having an electrolytic solution.

An example of a specific method for producing an electrode mixture sheet including the mixture composition for a secondary battery electrode is shown below.

The electrode mixture sheet of the present disclosure can be produced by a method including:
a step (1) of mixing a raw material composition containing a binder, a conductive aid and/or an electrode active material, and a liquid component that can be used as a component in a liquid electrolytic solution;
a step (2) promoting formation of fibrils of the raw material composition obtained in step (1) to produce granules; and
a step (3) of rolling the granulated composition obtained in step (2) into a sheet shape.

The raw material composition in step (1) preferably contains both the conductive aid and the electrode active material.

Further, the mixing in step (1) may be performed a plurality of times by changing conditions such as the number of revolutions per minute or the temperature, or by adding the raw materials in stages.

At the stage where the raw material composition is mixed in the above steps (1) and (2), the raw material composition exists in an undefined state in which the conductive aid, the binder, and the like are simply mixed. Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, and the like.

In the above step (1), the binder mixing conditions are set to suitably 30,000 rpm or less. The binder mixing conditions are in the range of preferably 1,000 rpm or more, more preferably 1,500 rpm or more, further preferably 2,000 rpm or more, and preferably 28,000 rpm or less, more preferably 26,000 rpm or less, and further preferably 25,000 rpm or less. If the binder mixing conditions fall below this range, the mixing will take time, which will affect productivity. On the other hand, if the binder mixing conditions exceeds this range, fibril formation may proceed excessively, resulting in an electrode mixture sheet having poor strength and flexibility. A preferred mixing method is a stirring mixer. Further, in order to suppress heat generation, the mixing may be carried out at 20 degrees or less by performing cooling.

In the above step (2), the binder mixing conditions are suitably 1,000 rpm or less. The number of revolutions is in the range of preferably 10 rpm or more, more preferably 15 rpm or more, and further preferably 20 rpm or more, and is in the range of preferably 900 rpm or less, more preferably 800 rpm or less, and further preferably 700 rpm or less. If the number of rotations is less than the above range, the mixing takes time, which affects productivity. On the other hand, if the number of rotations exceeds the above range, excessive fibrillation may occur, resulting in an electrode mixture sheet with inferior strength and flexibility.

Further, a liquid component that can be used as a component in the liquid electrolytic solution may be added as appropriate. A preferred mixing method is a twin-screw kneader. Further, cooling may be performed to suppress heat generation.

In the above step (2), the step of producing granules includes not only forming the raw material composition into a rod shape, a spherical shape, a cube shape, or the like, but also forming the raw material composition into a single lump.

Examples of the specific rolling method in step (3) include a method of rolling using a roll press machine, a flat plate press machine, a calender roll machine, or the like.

Moreover, it is also preferable to have, after the step (3), a step (4) of applying a larger load to the obtained roll sheet and rolling it into a thinner sheet. It is also preferable to repeat step (4). In this way, the flexibility is improved by rolling the sheet little by little in stages instead of thinning the roll sheet all at once.

The number of times that step (4) is carried out is preferably 2 times or more and 10 times or less, and more preferably 3 times or more and 9 times or less.

A specific rolling method is to, for example, rotate two or a plurality of rolls and pass the roll sheet between the rolls to form a thinner sheet.

Further, from the viewpoint of adjusting the fibril diameter, after step (3) or step (4), a step (5) of coarsely crushing the roll sheet, then again forming into a bulk shape, and rolling into a sheet may be performed. It is also preferable to repeat step (5). The number of times that step (5) is carried out is preferably 1 time or more and 12 times or less, and more preferably 2 times or more and 11 times or less.

In step (5), examples of the specific method of coarsely crushing and forming the roll sheet into a bulk shape include a method of folding the sheet, a method of forming into a rod or thin sheet shape, a method of chipping, and the like. In the present disclosure, "coarsely crush" means to change the form of the roll sheet obtained in step (3) or step (4) into another form for rolling into a sheet shape in the next step, and may include a case of simply folding a roll sheet.

Step (4) may be performed after step (5), or may be performed repeatedly.

Further, uniaxial stretching or biaxial stretching may be carried out in step (2) as well as steps (3), (4), and (5).

In addition, the fibril diameter (median value) can also be adjusted by the degree of coarse crushing in step (5) .

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling.

As described above, PTFE powder is fibrillated by applying a shear stress. In order to have a fibrous structure with a fibril diameter (median value) of 70 nm or less, if the shear stress is excessive, excessive fibrillation may proceed, which impairs flexibility. Further, if shear stress is weak, strength may not be sufficient. For this reason, during mixing and rolling, the step of rolling and stretching the resin into a sheet by applying shear stress to the PTFE to promote fibrillation is performed within the above range, whereby a fibrous structure with a fibril diameter (median value) of 70 nm or less can be obtained.

The PTFE preferably has a fibrous structure having a fibril diameter (median value) of 70 nm or less. By forming fine fibrils that have a fibrous structure with a fibril diameter (median value) of 70 nm or less, performance of flexibility and excellent processability as a binder for a mixture composition for a secondary battery electrode can be exhibited.

The fibril diameter (median value) is a value measured by the following method.
(1) Using a scanning electron microscope (Model S-4800, manufactured by Hitachi, Ltd.), an enlarged photograph (7000x) of the electrode mixture sheet is taken to obtain an image.
(2) Two lines equidistant from each other are drawn on the image in the horizontal direction to divide the image into three equal parts.
(3) The diameter of each PTFE fiber on the upper straight line is measured at three locations, and the average value is taken as the PTFE fiber diameter. The three locations to be measured are the intersection between the PTFE fiber and the straight line, and the locations 0.5 µm above and below the intersection (PTFE primary particles not formed into fibrils are excluded).
(4) The task of (3) above was then carried out for all the PTFE fibers on the lower straight line.
(5) Starting from the first image, the electrode mixture sheet was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

Further preferably, the fibril diameter (median value) is 65 nm or less. Excessive fibril formation tends to result in loss of flexibility. Although the lower limit of the fibril diameter (median value) is not limited, from the viewpoint of strength, it is preferably, for example, 15 nm or more.

The electrode mixture sheet of the present disclosure can be used as an electrode mixture sheet for a secondary battery, and can be used for either a negative electrode or a positive electrode. In particular, the electrode mixture sheet of the present disclosure is suitable for a lithium ion secondary battery.

### (Positive electrode)

In the present disclosure, it is preferable that the positive electrode is constructed from a current collector and an electrode mixture sheet including the above-described positive electrode active material.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode active material, it is preferable to coat the surface of the current collector with a conductive aid. Examples of the conductive aid include carbon and noble metals such as gold, platinum, and silver.

The ratio of the thickness of the current collector to the positive electrode mixture is not limited, but the value of (thickness of the positive electrode mixture on one side immediately before electrolytic solution injection)/(thickness of the current collector) is in the range of preferably 20 or lower, more preferably 15 or lower, and most preferably 10 or lower, and preferably 0.5 or higher, more preferably 0.8 or higher, and most preferably 1 or higher. If this range is exceeded, the current collector may generate heat due to Joule heat during high current density charging and discharging. If the ratio is below this range, the volume ratio of the current collector to the positive electrode active material increases, and the capacity of the battery may decrease.

The positive electrode may be produced according to a conventional method. An example of such a method includes laminating the electrode mixture sheet and the current collector with an adhesive arranged therebetween, and then vacuum drying.

The density of the positive electrode mixture sheet is preferably in the range of 3.00 g/cm³ or more, more preferably 3.10 g/cm³ or more, and further preferably 3.20 g/cm³ or more, and preferably 3.80 g/cm³ or less, more preferably 3.75 g/cm³ or less, and further preferably 3.70 g/cm³ or less. If the density exceeds this range, the penetration of the electrolytic solution into the vicinity of the current collector/active material interface decreases, and the charge/discharge characteristics, particularly at high current densities, deteriorates, which may prevent a high output from being obtained. Meanwhile, if the density is lower than this range, the electric conductivity between the active materials decreases and battery resistance increases, which may prevent a high output from being obtained.

The surface area of the positive electrode mixture sheet is, from the viewpoint of increasing stability at high output and high temperature, preferably larger than the outer surface area of the battery exterior case. Specifically, it is preferred that the total electrode mixture surface area of the positive electrode relative to the surface area of the exterior of the secondary battery be larger by a factor of 15 times or more, and more preferably 40 times or more. In the case of a rectangular shape with a bottom, the exterior surface area of the battery exterior case refers to the total area calculated from the length, width, and thickness dimensions of the case portion filled with the power generating elements, excluding the protruding parts of the terminals. In the case of a cylindrical shape with a bottom, the exterior surface area of the battery exterior case refers to the geometric surface area that approximates, as a cylinder, the case portion filled with the power generation elements, excluding the protruding portions of the terminal. The total electrode mixture surface area of the positive electrode is the geometric surface area of the positive electrode mixture layer facing the mixture layer containing the negative electrode active material, and for a structure consisting of a positive electrode mixture layer formed on both sides via a current collector foil, refers to the sum of the areas calculated for each surface separately.

The thickness of the positive electrode is not limited, but from the viewpoint of a high capacity and a high output, the thickness of the mixture layer after subtracting the thickness of the metal foil of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### (Negative electrode)

In the secondary battery of the present disclosure, it is preferable that the negative electrode is constructed from a current collector and an electrode mixture sheet containing the above-described negative electrode active material.

Examples of the material of the current collector for the negative electrode include metals such as copper, nickel, titanium, tantalum, and stainless steel, metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

The negative electrode may be produced according to a conventional method. An example of such a method includes laminating the electrode mixture sheet and the current collector with an adhesive arranged therebetween, and then vacuum drying.

The density of the negative electrode mixture is preferably 1.3 g/cm³ or more, more preferably 1.4 g/cm³ or more, and further preferably 1.5 g/cm³ or more, and preferably 2.0 g/cm³ or less, more preferably 1.9 g/cm³ or less, and further preferably 1.8 g/cm³ or less. If the density exceeds this range, the penetration of the electrolytic solution into the vicinity of the current collector/active material interface decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the metal foil thickness of the mixture layer after subtracting the thickness of the current collector is, as the lower limit for one side of the current collector, preferably 10 µm or more, and more preferably 20 µm or more, and preferably 500 µm or less, and more preferably 450 µm or less.

### (Secondary battery)

The present disclosure also relates to a secondary battery using the above-described electrode mixture sheet. The secondary battery of the present disclosure can use an electrolytic solution, a separator, and the like that are used in known secondary batteries. These are now described in detail.

### (Electrolytic solution)

As the non-aqueous electrolytic solution, a solution obtained by dissolving a known electrolyte salt in a known organic solvent for dissolving the electrolyte salt can be used.

As the components mentioned here, the components mentioned above as examples that can be added to the formulation of the battery mixture can be used.

The liquid component and the electrolyte in the battery mixture are preferably the same component, but may be different as long as the battery performance is not affected. Further, since it is difficult to add all of the required amount of the electrolytic solution when producing the above-described battery mixture sheet, it is preferred to use a predetermined electrolytic solution when producing the battery. Examples of the liquid components that can be used as the electrolytic solution include those mentioned above.

Preferably, the electrolytic solution contains an electrolyte salt. As the electrolyte salt, it is possible to use any electrolyte salt, such as a lithium salt, an ammonium salt, a metal salt, a liquid salt (ionic liquid), an inorganic polymer salt, an organic polymer salt, that can be used in an electrolytic solution.

The electrolyte salt in the electrolytic solution for a lithium ion secondary battery is preferably a lithium salt.

Any lithium salt can be used, and specific examples include the following. For example, inorganic lithium salts such as LiPF₆, LiBF₄, LiClO₄, LiAlF₄, LiSbF₆, LiTaF₆, LiWF₇, LiAsF₆, LiAlCl₄, LiI, LiBr, LiCl, LiB₁₀Cl₁₀, Li₂SiF₆, Li₂PFO₃, and LiPO₂F₂;
lithium tungstates such as LiWOF₅;
lithium carboxylates such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium salts having an S=O group such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, lithium methyl sulfate, lithium ethyl sulfate (C₂H₅OSO₃Li), and lithium 2,2,2-trifluoroethyl sulfate;
lithium imide salts such as LiN(FCO)₂, LiN (FCO) (FSO₂), LiN(FSO₂)₂, LiN(FSO₂)(CF₃SO₂), LiN(CF₃SO₂)₂, LiN(C₂F₅SO₂)₂, lithium bisperfluoroethanesulfonylimide, lithium cyclic 1,2-perfluoroethanedisulfonylimide, lithium cyclic 1,3-perfluoropropanedisulfonylimide, lithium cyclic 1,2-ethanedisulfonylimide, lithium cyclic 1,3-propanedisulfonylimide, lithium cyclic 1,4-perfluorobutanedisulfonylimide, LiN(CF₃SO₂)(FSO₂), LiN(CF₃SO₂)(C₃F₇SO₂), LiN(CF₃SO₂)(C₄F₉SO₂), and LiN(POF₂)₂;
lithium methide salts such as LiC(FSO₂)₃, LiC(CF₃SO₂)₃, and LiC(C₂F₅SO₂)₃;
other fluorine-containing organic lithium salts such as a salt represented by formula: LiPFₐ(CₙF₂ₙ₊₁)₆₋ₐ, wherein a is an integer of 0 to 5, and n is an integer of 1 to 6, (for example, LiPF₃(C₂F₅)₃, LiPF₃(CF₃)₃, LiPF₃(iso-C₃F₇)₃, LiPF₅(iso-C₃F₇), LiPF₄(CF₃)₂, LiPF₄(C₂F₅)₂), LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂, LiSCN, LiB(CN)₄, LiB(C₆H₅)₄, Li₂(C₂O₄), LiP(C₂O₄)₃, Li₂B₁₂F_{b}H_{12-b} (b is an integer of 0 to 3), and the like.

Among them, from the viewpoint of having an effect of improving output characteristics, high rate charge/discharge characteristics, high-temperature storage characteristics, cycle characteristics, and the like, particularly preferred are LiPF₆, LiBF₄, LiSbF₆, LiTaF₆, LiPO₂F₂, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₂SO₂)₃, LiC(C₂F₅SO₂)₃, LiBF₃CF₃, LiBF₃C₂F₅, LiPF₃(CF₃)₃, LiPF₃(C₂F₅)₃, and the like, and most preferred is at least one lithium salt selected from the group consisting of LiPF₆, LiPO₂F₂, FSO₃Li, LiN(FSO₂)₂, and LiBF₄.

These electrolyte salts may be used singly or in combinations of two or more thereof. A preferred example of the case where two or more are used in combination include the combination of LiPF₆ and LiBF₄, or the combination of LiPF₆ and LiPO₂F₂, C₂H₅OSO₃Li, or FSO₃Li, and such a combination has the effect of improving high-temperature storage characteristics, load characteristics, and cycle characteristics.

In this case, the amount of LiBF₄, LiPO₂F₂, C₂H₅OSO₃Li, or FSO₃Li added relative to 100% by mass of the whole electrolytic solution is not limited, and may be any amount as long as the effects of the present disclosure are not significantly impaired, but relative to the electrolytic solution of the present disclosure is usually 0.01% by mass or more, preferably 0.1% by mass or more, and usually 30% by mass or less, preferably 20% by mass or less, more preferably 10% by mass or less, and further preferably 5% by mass or less.

Another example is the combined use of an inorganic lithium salt and an organic lithium salt. The combined use of both of these has the effect of suppressing deterioration due to high temperature storage. As the organic lithium salt, preferred are CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₂SO₂)₃, LiC(C₂F₅SO₂)₃, LiBF₃CF₃, LiBF₃C₂F₅, LiPF₃(CF₃)₃, LiPF₃(C₂F₅)₃, and the like. In this case, the proportion of the organic lithium salt relative to 100% by mass of the whole electrolytic solution is preferably 0.1% by mass or more, particularly preferably 0.5% by mass or more, and preferably 30% by mass or less, and particularly preferably 20% by mass or less.

The concentration of these electrolyte salts in the electrolytic solution is not limited as long as the effects of the present disclosure are not impaired. From the viewpoint of setting the electrical conductivity of the electrolytic solution within a good range and ensuring good battery performance, the total molar concentration of lithium in the electrolytic solution is preferably 0.3 mol/L or more, more preferably 0.4 mol/L or more, and further preferably 0.5 mol/L or more, and is preferably 3 mol/L or less, more preferably 2.5 mol/L or less, and further preferably 2.0 mol/L or less.

If the total molar concentration of lithium is too low, the electrical conductivity of the electrolytic solution may be insufficient, while if the concentration is too high, the electrical conductivity may decrease due to increased viscosity, resulting in a decrease in battery performance.

### (Separator)

It is preferred that the secondary battery of the present disclosure further include a separator.

The material and shape of the separator are not limited as long as the separator is stable in the electrolytic solution and has excellent liquid retention properties, and known materials can be used. Among these, a separator formed from resin, glass fiber, an inorganic material, or the like, which are materials that are stable in the electrolytic solution of the present disclosure or in the electrolytic solution used for the alkali metal secondary battery of the present disclosure, is used, and it is preferred to use a separator that is in the form of a porous sheet or nonwoven fabric that has excellent liquid retention properties.

The material for a resin or glass fiber separator may be, for example, a polyolefin such as polyethylene or polypropylene, an aromatic polyamide, polytetrafluoroethylene, polyethersulfone, a glass filter, or the like. These materials may be used singly, or in combinations of two or more thereof in any combination and ratio, such as a polypropylene/polyethylene two-layer film or a polypropylene/polyethylene/polypropylene three-layer film.

Among these, the separator is preferably a porous sheet or nonwoven fabric made from a polyolefin, such as polyethylene or polypropylene, as a raw material, since such a separator has good penetration of electrolytic solution and shut-down effect.

The separator may be of any thickness, but is usually 1 µm or more, preferably 5 µm or more, and more preferably 8 µm or more, and usually 50 µm or less, preferably 40 µm or less, and more preferably 30 µm or less. If the separator is thinner than the above range, insulation properties and mechanical strength may deteriorate. Moreover, if the thickness is thicker than the above range, not only may battery performance such as rate characteristics deteriorate, but also the energy density of the electrolytic solution battery as a whole may decrease.

Further, when a porous material such as a porous sheet or a nonwoven fabric is used as a separator, the porosity of the separator is arbitrary, but is usually 20% or more, preferably 35% or more, and more preferably 45% or more, and usually 90% or less, preferably 85% or less, and more preferably 75% or less. If the porosity is lower than the above range, membrane resistance tends to increase and the rate characteristics tend to deteriorate. Moreover, if the porosity is higher than the above range, the mechanical strength of the separator tends to decrease and the insulation properties tend to deteriorate.

In addition, the average pore size of the separator is also arbitrary, but it is usually 0.5 µm or less, and preferably 0.2 µm or less, and usually 0.05 µm or more. If the average pore size exceeds the above range, short circuits tend to occur. Further, if the average pore size is below the above range, film resistance may increase and the rate characteristics may deteriorate.

On the other hand, as inorganic materials, for example, oxides such as alumina and silicon dioxide, nitrides such as aluminum nitride and silicon nitride, and sulfates such as barium sulfate and calcium sulfate may be used, and materials in the shape of particles or fibers may be used.

The separator used may be in a thin film shape such as nonwoven fabric, woven fabric, and microporous film. In the case of a thin film shape, it is preferred to use a thin film having a pore diameter of 0.01 to 1 µm and a thickness of 5 to 50 µm. Other than an independent thin film shape as described above, a separator in which a composite porous layer containing the above-described inorganic particles is formed on the surface layer of the positive electrode and/or negative electrode using a resin binder can be used.

For example, a porous layer may be formed on both sides of the positive electrode using alumina particles having a 90% particle size of less than 1 µm and a fluororesin as a binder.

### (Battery design)

An electrode mixture unit may be either a laminated structure consisting of the positive electrode and the negative electrode with the separator interposed therebetween, or a structure in which the positive electrode and the negative electrode are spirally wound with the separator interposed therebetween. The proportion of the battery internal volume taken up by the volume of the electrode mixture unit (hereinafter referred to as "electrode mixture unit share") is usually 40% or more, and preferably 50% or more, and usually 90% or less, and preferably 80% or less.

When the electrode mixture unit share is below the above range, the battery capacity decreases. In addition, when the above range is exceeded, there is less void space, and so when the battery becomes hot, this causes the components to expand and the vapor pressure of the liquid component of the electrolyte to increase, resulting in an increase in internal pressure, which can cause the properties of the battery, such as charge/discharge cycle performance and high-temperature storage, to deteriorate, and furthermore, a gas release valve may be activated to release internal pressure to the outside.

The current collecting structure is not limited, but in order to more effectively improve the charge/discharge characteristics of high current density due to the electrolytic solution, a structure that reduces the resistance of the wiring parts and connection parts is preferred. When the internal resistance is reduced in this way, the effect of using the electrolytic solution exhibited particularly well.

When the electrode mixture unit has the above-described laminated structure, a structure in which the metal core portions of each electrode mixture layer are bundled and welded to the terminals is suitably used. In a case where the surface area of one sheet of electrode mixture is large, the internal resistance increases, and thus it is preferred to use to provide a plurality of terminals within the electrode mixture to reduce resistance. When the electrode mixture unit has the above-described wound structure, internal resistance can be reduced by providing a plurality of lead structures for each positive electrode and negative electrode and bundling them into a terminal.

The material of the exterior case is not limited as long as the material is stable to the electrolytic solution used. Specifically, metals such as a nickel-plated steel plate, stainless steel, aluminum, aluminum alloys, and magnesium alloys, or a laminated film (laminate film) of resin and aluminum foil may be used. From the viewpoint of weight reduction, it is preferred to use a metal such as aluminum or an aluminum alloy, or a laminate film.

For an exterior case that uses metals, examples of the structure include a hermetically sealed structure obtained by welding the metal pieces together using laser welding, resistance welding, or ultrasonic welding, and a structure obtained by caulking the metal pieces using a resin gasket. For an exterior case that uses the above-described laminate film, examples include a structure in which resin layers are heat-sealed to each other to form a hermetically sealed structure. To improve sealability, a resin different from the resin used for the laminate film may be interposed between the resin layers. In particular, when creating a sealed structure by heat-sealing a resin layer via a current collector terminal, the metal and the resin are joined, and so as the intervening resin, it is preferred to use a resin having a polar group or a modified resin having a polar group introduced.

The secondary battery of the present disclosure may be of any shape, and examples thereof include a cylindrical shape, a square shape, a laminate shape, a coin shape, and a large size. It is noted that the shapes and configurations of the positive electrode, negative electrode, and separator can be changed in accordance with the shape of each battery.

### Examples

Hereinafter, the present disclosure will be specifically described based on examples.

In the following examples, "parts" and "%" represent "parts by mass" and "% by mass", respectively, unless otherwise specified.

### Examples 1 to 5 and Comparative Example 1

### (Production of positive electrode)

As a mixture sheet material, LiNi_{0.6}Mn_{0.2}Co_{0.2}O₂ as an active material, acetylene black as a conductive aid, and PTFE (F-106 manufactured by Daikin Industries, Ltd.) as a binder were weighed so that the mass ratio was 96:3:1. The weighed materials were charged into a high-speed mixer heated to 40°C, 20 parts of a forming aid was added, and mixing was performed at 20,000 rpm for 2 minutes. An additional 15 parts of the forming aid was added and mixed in the same manner. Table 1 shows the forming aid used. The forming aid that was used had been dehydrated with a molecular sieve to reduce the moisture content to 500 ppm or less before use. The moisture content of the obtained mixture composition was 300 ppm or less.

The obtained mixture was charged into a single screw extruder and extruded from a mold to obtain a sheet. The temperature of the extruder was set to 60°C using a chiller. The gap was adjusted to obtain a sheet having a thickness of about 2,000 µm. Thereafter, rolling was repeated to obtain a sheet having a thickness of 100 µm.

Then, the sheet was stacked on an aluminum mesh current collector and rolled using a roll press machine heated to 90°C to produce a positive electrode. By heating, the binding properties can be increased and integral forming can be achieved.

### (Negative electrode)

As a thickener and a binder, 1 part by mass of an aqueous dispersion of sodium carboxymethylcellulose (concentration of sodium carboxymethylcellulose 1% by mass) and 1 part by mass of an aqueous dispersion of styrene-butadiene rubber (styrene-butadiene rubber concentration 50% by mass) were added to 98 parts by mass of a carbonaceous material (graphite), and the resultant mixture was mixed using a disperser to form a slurry.

The obtained slurry was coated on a copper foil having a thickness of 15 µm, dried, rolled with a press, and cut to obtain a negative electrode.

### (Preparation of electrolytic solution)

Ethylene carbonate (EC), ethyl methyl carbonate (EMC), and dimethyl carbonate (DMC) were mixed in a volume ratio of 30/30/40. LiPF₆ was added to this mixture at a concentration of 1.2 mol/liter, and vinylene carbonate was added and dissolved at a concentration of 2% by mass to obtain a non-aqueous electrolytic solution.

### (Production of aluminum laminate cell)

The positive electrode and negative electrode were placed facing each other through a 20 µm thick microporous polyethylene film (separator), and the non-aqueous electrolytic solution obtained above was injected therein. After the non-aqueous electrolytic solution had sufficiently permeated the separator and the like, the cell was sealed, pre-charged, and aged to produce a lithium ion secondary battery.

**[Table 1]**

| | Type of forming aid | Boiling point |
|---|---|---|
| Example 1 | Ethylene carbonate | 243°C |
| Example 2 | Ethyl methyl carbonate | 107°C |
| Example 3 | Fluoroethylene carbonate | 212°C |
| Example 4 | 1,1,2,2-Tetrafluoroethyl 2,2,3,3-tetrafluoropropyl ether | 92°C |
| Example 5 | 1-Methyl-1-propylpyrrolidinium bis(fluorosulfonyl)imide | 200°C or higher |
| Example 6 | Propyl propionate | 122°C |
| Example 7 | Succinonitrile | 159°C |
| Comparative Example 1 | Isopropyl alcohol | 82°C |
| Comparative Example 2 | Isopropyl alcohol | 82°C |
| Comparative Example 3 | Liquid paraffin | 300°C or higher |
| Comparative Example 4 | No liquid | |

### [Evaluation of high-temperature cycle characteristics test (capacity retention, gas amount)]

The lithium ion secondary battery produced above was sandwiched between plates and pressurized. In that state, the battery was charged at 60°C with a current equivalent to 1 C at a constant current-constant voltage charge (hereinafter referred to as CC/CV charge) (0.1 C cut), then discharged to 3 V at a constant current of 1 C. Taking this as one cycle, the initial discharge capacity was determined from the discharge capacity of the third cycle. A relative comparison was made based on the initial capacity of Comparative Example 1 of 100.

Then, after the battery was sufficiently cooled in an environment of 25°C, the volume was measured by the Archimedes method to determine the volume of the battery at 25°C. The cycle was repeatedly carried out, and the discharge capacity after 200 cycles was taken as the post-cycle capacity. The proportion of the discharge capacity after 200 cycles to the initial discharge capacity was calculated, and this was taken as cycle capacity retention (%). (Discharge capacity after 200 cycles) ÷ (Initial discharge capacity) × 100 = Capacity retention (%)

Then, after the battery was sufficiently cooled in an environment of 25°C, the volume was measured again, and the amount of gas generated was determined from the change in volume before and after the high temperature cycle characteristics test.

**[Table 2]**

| | Initial capacity | Amount of gas generated (ml) | Cycle capacity retention (%) |
|---|---|---|---|
| Comparative Example 1 | 100 | 4.3 | 65 |
| Example 1 | 145 | 2.2 | 89 |
| Example 2 | 140 | 1.9 | 88 |
| Example 3 | 139 | 2.0 | 92 |
| Example 4 | 130 | 2.9 | 80 |
| Example 5 | 145 | 1.6 | 80 |

### <Production of positive electrode mixture sheet>

Production of the mixture sheets of Examples 6 and 7 and Comparative Examples 2 to 4 was carried out according to the following procedure.

First, a positive electrode active material, a conductive aid, and a binder were weighed so that the mass ratio was 97:2:1, and charged into the container of a high-speed mixer (Wonder Crusher (WC-3), manufactured by Osaka Chemical Co., Ltd.).

Then, the whole container was sufficiently cooled in a constant temperature bath (5°C, 8 hours). Next, the cooled container was set in the high-speed mixer, and stirring was carried out at 10,000 rpm for 3 minutes to disperse the materials.

The following materials were used.
Positive electrode active material: Li(Ni_{0.8}Mn_{0.1}Co_{0.1})O₂, (hereinafter referred to as NMC811)
Conductive aid: Carbon black SuperP
Binder: PTFE (F-104, manufactured by Daikin Industries, Ltd.)

Next, the obtained electrode mixture was charged into a pressure kneader heated to 50°C, and 8 parts of the forming aid listed in Table 1 was added. The mixture was kneaded at 30 rpm for 100 seconds to promote the formation of fibrils, thereby obtaining an electrode mixture. The forming aid that was used had been dehydrated with a molecular sieve to reduce the moisture content to 500 ppm or less before use.

The obtained electrode mixture was charged into metal rolls (80°C) arranged in parallel to obtain thin chips of about 1 to 2 cm². These chips were repeatedly charged into a rolling roll heated to 80°C several times to obtain a sheet.

A self-supporting electrode mixture sheet was produced by rolling the sheet several times. The temperature of the metal roll was set at 80°C. Then, the gap was narrowed in a stepwise manner to adjust to obtain a positive electrode mixture sheet. The positive electrode mixture sheet was produced so as to have a thickness of 80 µm and a density of 3.50 g/cc.

### <Measurement of positive electrode mixture sheet strength>

Evaluation of the positive electrode mixture sheets of Examples 6 and 7 and Comparative Examples 2 to 4 was carried out according to the following procedure.

The positive electrode mixture sheets were cut to produce a strip-shaped test piece having a width of 4 mm. The strength of the sheets was measured using a tensile tester (AGS-100NX, manufactured by Shimadzu Corporation) under the condition of 10 mm/min. The chuck-to-chuck distance was 40 mm. Displacement was applied until the breakage, and the maximum stress obtained in the measured results was taken as the strength of each sample. Comparative Example 2 was set as 100 for comparison. The results are shown in Table 3.

### <Production of positive electrode>

Production of the electrode sheets and batteries of Examples 6 and 7 and Comparative Examples 2 to 4 was carried out according to the following procedure.

The positive electrode mixture sheet was adhered to 20 µm aluminum foil in the following manner.

As an adhesive, a slurry obtained by dissolving polyvinidene fluoride (PVDF) in N-methylpyrrolidone (NMP) and dispersing carbon black in a solid ratio of 80:20 was used. The adhesive was coated on the aluminum foil and dried on a hot plate at 120°C for 15 minutes to form a current collector foil with a 4 µm thick adhesive layer.

Then, the positive electrode mixture sheet was placed on the current collector foil with an adhesive layer, and the positive electrode mixture sheet and the current collector were pasted together using a roll press machine heated to 90°C. The sheet was cut to a desired size, a tab was formed thereon, and the resultant sheet was used as a positive electrode.

### <Production of aluminum laminate cell>

A lithium ion secondary battery was produced and evaluated according to the same procedure as in Example 1 by laminating a negative electrode, a separator, and a positive electrode, injecting a nonaqueous electrolytic solution, pre-charging, and aging in the manner described above. The results are shown in Table 3.

**[Table 3]**

| | Tensile strength | Initial capacity | Amount of gas generated (ml) | Cycle capacity retention (%) |
|---|---|---|---|---|
| Comparative Example 2 | 100 | 100 | 4.5 | 66 |
| Comparative Example 3 | 130 | 72 | 6.8 | 52 |
| Comparative Example 4 | 75 | 130 | 2.0 | 74 |
| Example 6 | 120 | 140 | 2.3 | 78 |
| Example 7 | 124 | 125 | 1.7 | 80 |

From the above, it can be seen that a positive electrode mixture sheet having excellent strength can be obtained by using the liquid component in the electrolytic solution as a forming aid. It is thought that this can reduce the amount of binder added and maintain good battery characteristics. Further, it was found that by selecting the forming aid, it is possible to produce a battery having a high capacity retention and good battery characteristics, with less gas generation without the residual aid causing a deterioration in the battery characteristics.

### Industrial Applicability

The mixture composition for a secondary battery electrode of the present disclosure has excellent battery characteristics and moldability, and an electrode mixture sheet using this can be suitably used for a secondary battery and the like.

## Claims

1. A mixture composition for a secondary battery electrode, comprising a binder, a conductive aid and/or an electrode active material, and a liquid component that can be used as a component in a liquid electrolytic solution.

2. The mixture composition for a secondary battery electrode according to claim 1, comprising a conductive aid.

3. The mixture composition for a secondary battery electrode according to claim 1 or 2, wherein the binder is a polytetrafluoroethylene resin.

4. The mixture composition for a secondary battery electrode according to any one of claims 1 to 3, wherein a content of the binder is 0.1 to 10% by mass.

5. The mixture composition for a secondary battery electrode according to any one of claims 1 to 4, wherein a content of the liquid component is 1 to 30% by mass.

6. The mixture composition for a secondary battery electrode according to any one of claims 1 to 5, wherein the liquid component has a boiling point of 90°C or higher.

7. The mixture composition for a secondary battery electrode according to any one of claims 1 to 6, wherein the liquid component includes at least one compound selected from the group consisting of an ether compound, an ionic liquid, a carboxylic acid ester compound, a nitrile compound, and a carbonate.

8. The mixture composition for a secondary battery electrode according to claim 7, wherein the liquid component is a carbonate.

9. The mixture composition for a secondary battery electrode according to any one of claims 1 to 8, comprising an electrode active material.

10. The mixture composition for a secondary battery electrode according to any one of claims 1 to 9, comprising a positive electrode active material.

11. A method for producing an electrode mixture sheet comprising:
a step (1) of mixing a raw material composition containing a binder, a conductive aid and/or an electrode active material, and a liquid component that can be used as a component in a liquid electrolytic solution;
a step (2) of promoting formation of fibrils of the raw material composition obtained in step (1) to produce granules; and
a step (3) of rolling the granulated composition obtained in step (2) into a sheet shape.

12. An electrode mixture sheet comprising the mixture composition for a secondary battery electrode according to any one of claims 1 to 10.

13. An electrode comprising the electrode mixture sheet according to claim 12.

14. A secondary battery comprising the electrode mixture sheet according to claim 12.
